# EUROPEAN PATENT SPECIFICATION

(11) **EP 0 533 128 B1**
(45) Date of publication and mention of the grant of the patent: **06.12.1995**
(21) Application number: 92115828.3
(22) Date of filing: 16.09.1992
(51) Int. Cl.: C23C 8/10, C23C 8/12, C23C 8/16, B23P 15/06, F16J 9/00

(54) **Piston ring made of a titanium alloy and process for production thereof**
Kolbenring aus Titan-Legierung und Verfahren zur Herstellung
Segment de piston en alliage de titane et procédé de fabrication

(30) Priority: 17.09.1991 JP 236449/91; 27.07.1992 JP 199663/92
(43) Date of publication of application: 24.03.1993
(73) Proprietor: HITACHI METALS, LTD., Chiyoda-ku, Tokyo (JP)
(72) Inventor: Takuwa, Minoru, Matsue-shi (JP); Tokuda, Kenji, Yasugi-shi (JP)
(74) Representative: Beetz & Partner Patentanwälte

(56) References cited:
- EP-A- 0 244 253
- EP-A- 0 388 710
- DE-A- 2 109 249
- US-A- 4 941 669
- PATENT ABSTRACTS OF JAPAN, vol. 9, no. 316 (M-438)(2039), 12 December 1985; & JP-A-60 150 462
- PATENT ABSTRACTS OF JAPAN, vol. 14, no. 364 (M-1007), 7 August 1990; & JP-A-21 29 467
- PATENT ABSTRACTS OF JAPAN, vol. 13, no. 362 (C-625),14 August 1989; & JP-A-11 19 682

## Description

### BACKGROUND OF THE INVENTION

### Field of the Invention

The present invention relates to a piston ring used in internal-combustion engines.

### Description of Related Art

As piston rings for internal-combustion engines, there have heretofore been used those obtained by subjecting the surface of a ring made of cast iron to hard chromium plating. But, there have been the following problems. A piston ring thin in its axial direction is difficult to produce, and only a heavy piston ring having a relatively large sectional area can be produced. Employment of such a piston ring results in a high inertia, so that a fluttering phenomenon tends to occur. In recent years, in compliance with the demand for internal-combustion engines having a high power, a high speed and a measure to counter exhaust gas, steel piston rings obtained by melting steel, making the molten steel into a wire by hot working and cold working, and then bending the wire into a ring shape after thermal refining are becoming leading piston rings. Materials for these steel rings include Si-Cr steels, stainless steels of 13Cr type and 17Cr type, etc. There are used piston rings obtained by subjecting the surface of the steel rings to surface treatment such as hard chromium plating or nitriding treatment.

As described above, the steel piston rings have, for example, the following advantages which conventional piston rings made of cast iron can not have. The width of the steel piston rings in their axial direction can be reduced, so that their contact area with a cylinder wall is reduced, resulting in a reduced friction loss. Moreover, the weight of the steel piston rings themselves can be reduced.

However, because of the recent growing demand for a higher power, there has come to be required a material for piston ring which is suitable for higher-speed rotation. For employing a piston ring in high-speed rotation, a further reduction of the weight of the piston ring is necessary. Conventional steel piston rings are disadvantageous in that when they are further thinned, their strength becomes insufficient, so that the important function of an internal-combustion engine using them is impaired.

The steel piston rings usually have a hard chromium plating layer. Japanese Patent Application Kokai No. 2-129467 has proposed coating with a titanium nitride film for improving the heat resistance and the abrasion resistance. Japanese Patent Application Kokai No. 2-129467 discloses a piston ring comprising a main body of piston ring made of steel, a titanium or titanium alloy layer adhered to the periphery of the main body, and a titanium nitride layer formed on at least the periphery. However, in this case, only a small weight-reducing effect can be obtained because tool steel or martensitic stainless steel is used in the main body of the aforesaid piston ring for securing spring properties. The main role of the titanium or titanium alloy layer formed as a clad on the steel main body is to form the relatively thick titanium nitride layer of 50 »m or more in thickness on the periphery side of the main body with sufficient adhesion. That is, this prior art is nothing but a steel piston ring.

In addition, Japanese Patent Application Kokai No. 1-119682 discloses an engine valve and a connecting rod as members obtained by heating a surface layer of pure titanium or a titanium alloy to a temperature higher than the melting point (which is about 1,700°C or higher), allowing the molten portion to absorb oxygen to form a solid solution, and thereby forming a case which is a molten oxygen-enriched layer. However, when the surface layer of the thin and ring-shaped periphery of, for example, the piston ring to which the present invention is directed, is heated to a temperature higher than the high melting point of about 1700°C, there are the following disadvantages. The piston ring is deformed by thermal influence or contraction during solidification, and its toughness is deteriorated by the formation of a re-solidified structure. Therefore, the means disclosed in Japanese Patent Application No. 1-119682 cannot be employed.

On the other hand, EP-A-0388710 discloses a surface treatment of titanium or titanium alloy by heating in an oxidative atmosphere at 700 to 1050 °C, thereby improving the abrasion resistance and burning resistance.

Similarly, EP-A-0244253 discloses a surface treatment of titanium or titanium alloy articles by heating in an oxygen-containing atmosphere at a temperature below 800 °C, particularly between 500 and 800 °C, thereby improving the wear resistance of the outer surface of said articles.

The present invention is intended to provide a novel piston ring which is lighter in weight than conventional steel piston rings and has a strength enough to withstand a high power and a high speed, and a process for producing said piston ring.

### SUMMARY OF THE INVENTION

Since there is a limit to the reduction of the weight of a conventional steel piston ring, the present inventors noted titanium or a titanium alloy which has a specific gravity of 60% of that of steel. The present inventors investigated employment of titanium or the titanium alloy in a main body of piston ring.

That is, the piston ring of the present invention is characterized in that it comprises substantially a titanium alloy alone, without any steel.

Piston rings made of titanium or a titanium alloy involve, as factors inhibiting their practical application, problems in characteristics required of the piston rings themselves, and problems in the production which are obstacles to fabrication into the piston rings.

For giving characteristics required of the piston rings, titanium or titanium alloys are disadvantageous in that
(1) they have low strength and insufficient resistance to thermal settling and abrasion resistance, and
(2) seizure tends to occur between them and a metal on which they slide.

As a method for fabrication into the piston ring, there are, for example, (a) shaving of a rod, (b) cutting of a pipe in round slices, and (c) punching of a plate material or cutting of a wire. However, the following was found. The methods (a) and (c) greatly decrease the yield. In addition, the methods (a) and (b) give a fiber structure in the axial direction of the ring, while the method (c) gives a fiber structure in a definite direction in relation to the surface of the ring. Consequently, the strength and toughness of the titanium alloy are further decreased.

Further investigations were conducted on the above problems in characteristics and problems in the production. As a result, the following was found. As to the problems in characteristics, when a material for a main body of piston ring is limited to a titanium alloy because pure titanium is insufficient in strength and resistance to thermal settling, a certain high strength and uniform spring properties can be attained by producing a piston ring by processing the titanium alloy into a wire, bending the wire into a ring shape, and thereby making the direction of fiber structure the same as the circumferential direction of the ring.

The "fiber structure" defined in the present specification is explained below.

The term "fiber structure" used in the present specification is a generally and frequently used technical term, and it is said in other words "metal flow".

The structure called a fiber structure or a metal flow is a fibrous structure formed by plastic deformation in a certain direction and is markedly formed particularly by plastic working such as rolling. As a microstructure, the fiber structure is characterized by deformation of carbides, precipitates, inclusions, precipitated phases, etc. in the longitudinal direction of the fiber structure, and their preferential arrangement or array in the same direction.

The above methods for fabrication into a piston ring are not suitable for solving the problem in the production. Therefore, there was investigated a method comprising processing into a wire and bending of the wire into a ring shape. This method, however, involves the following problems in the production which are characteristic of titanium alloys.
(i) Seizure tends to occur between the titanium alloys and a die during cold drawing, and the reduction of area per pass is small, so that the number of drawing operations is increased.
(ii) During annealing for removing distortion, a slight amount of oxygen in vacuum or an inert gas forms a solid solution together with a parent material, giving a hard and brittle oxygen-enriched layer on a surface portion of the parent material, so that cold drawing or cold bending as a subsequent step becomes very difficult.
(iii) The titanium alloys tend to absorb hydrogen, and the toughness is deteriorated particularly when pickling conditions are not proper.

The present invention has solved both the above problems in characteristics required of the piston rings themselves and problems in the production.

In detail, the first aspect of the present invention is directed to a piston ring made of a titanium alloy as claimed in claim 1. Preferred embodiments of the piston ring are defined in claims 2 and 3. Another aspect of the present invention is directed to a process for producing a piston ring made of a titanium alloy as claimed in claim 4. Preferred embodiments of the method of the invention are defined in claims 5 and 6.

The term "piston ring having a cross section which is not round" used in the present specification is a general term for piston rings whose cross section has a shape other than a round shape. A typical example of such cross section is a rectangular shape or a shape obtained by tapering any of the sides of a rectangular shape. The piston ring having such a modified shape of cross section includes oil rings which are called I-shaped oil rings because their shape is similar to that of the letter I in the alphabet.

### BRIEF DESCRIPTION OF THE DRAWING

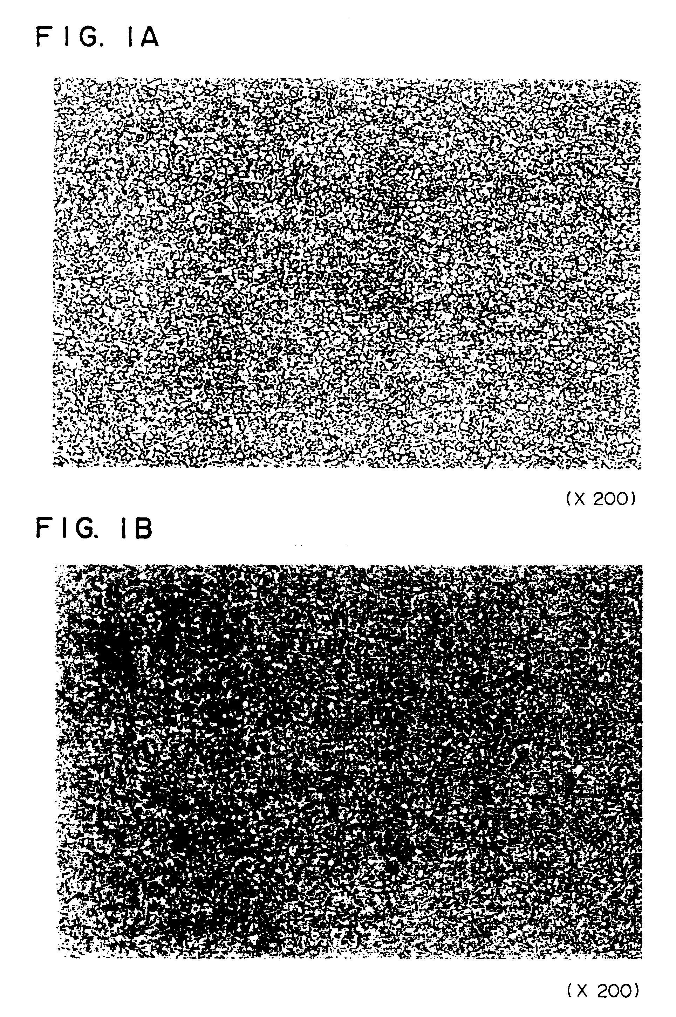

Fig. 1A shows the metal structure in a longitudinal section of an annealed structure which shows the fiber structure of a Ti-6Al-4V alloy wire (2.0 mm x 3.5 mm).

Fig. 1B shows the metal structure in a longitudinal section of a solution-treated and aged structure which shows the aforesaid fiber structure.

### PREFERRED EMBODIMENTS OF THE INVENTION

As the titanium alloy used in the main body of piston ring used in the present invention, there can be used any of α type alloys, α + β type alloys and β type alloys so long as it is a titanium-based alloy other than pure titanium having a low strength. Of these alloys, the α + β type alloys and the β type alloys can be strengthened by combination of solution treatment and aging treatment, though they may be used after only processing into a wire or after being annealed.

The piston ring made of a titanium alloy of the present invention is limited to a piston ring having a metal flow, i.e., a fiber structure, in the circumferential direction of the ring, namely, a piston ring obtained by bending after processing into a wire. As examples, the metal structures in longitudinal sections of Ti-6Al-4V alloy wires are shown in Figs. 1A and 1B. It is observed that whether the wire is in an annealed state or a solution-treated and aged state, it has a fiber structure in the longitudinal direction. Thus, the piston ring made of a titanium alloy of the present invention can secure sufficient strength and toughness against external flexure stress because its fiber structure per se has a ring shape and conforms the shape of the ring. As described above, the fiber structure of a ring obtained from a rod, a pipe or a plate material which is a prior art, cannot give high strength and toughness unlike in the present invention.

Since seizure tends to occur between the piston ring made of a titanium alloy of the present invention and a metal on which the piston ring slides, it is absolutely necessary to form a hardened case on at least a sliding surface of the ring which slides on a cylinder. The hardened case enables the piston ring to fulfill its function, by sliding directly on the cylinder. Therefore, in spite of the high abrasion resistance of the piston ring, the air tightness cannot be maintained when the cylinder as partner is abnormally worn away. Accordingly, there is required a hardened case having not only high hardness but also low seizing properties for the metal on which the piston ring slides. As a surface treatment(s) for forming the hardened case, there can be properly employed various surface treatments such as hard chromium plating, porous chromium plating, composite plating, Cr spraying, CrN coating by a physical vapor deposition (PVD) method, Mo spraying, nitriding, etc. singly or in combination of two or more thereof.

It is also one of the additional characteristics of the present invention that besides the above-mentioned hardened case, a hardened case composed of a non-molten oxygen-enriched layer can be formed as known as such from EP-A-0388710 and 0244253. For forming this hardened case, a wire is bent into a ring shape and then held in an oxygen-containing atmosphere with heating at a temperature of 550 - 1050°C. By this treatment alone, the non-molten oxygen-enriched layer can be formed in a surface portion of the ring. This layer markedly enhances the abrasion resistance and resistance to seizure of the sliding portion. Moreover, the oxygen-enriched layer formed in surface portions other than the sliding portion is effective also in strengthening the main body of piston ring.

The non-molten oxygen-enriched layer according to the present invention is an oxygen-enriched layer (referred to also as α case) obtained merely by holding a wire in an oxygen-containing atmosphere with heating at a temperature much lower than the melting point. Therefore, it is utterly different from the above-mentioned hardened case of Japanese Patent Application Kokai No. 1-119682 which is formed by heating the surface layer to a temperature higher than the melting point and thereby allowing the molten portion to absorb oxygen to form a solid solution.

The hardened case comprising the non-molten oxygen-enriched layer can enhance the abrasion resistance of the piston ring itself and greatly suppress seizure between the piston ring and the metal constituting a cylinder. A larger effect can be obtained by forming, if necessary, a composite case by a proper combination of various surface treatments such as hard chromium plating, porous chromium plating, composite plating, Cr spraying, CrN coating by a physical vapor deposition (PVD) method, Mo spraying, nitriding, etc. Since the above surface treatments are effective in making up for the strength deficiency of the titanium alloy, i.e., the parent material of the piston ring, the aforesaid hardened case may, if necessary, be formed not only in a sliding surface which slides on a cylinder wall, but also in other surface portions.

For making the titanium alloy into a wire according to the process of the present invention, surface defects and scales are removed by scaling a hot-rolled coil of wire mechanically by shaving or peeling. Then, continuous drawing is conducted with heating in a temperature range of 400 - 750°C for a short time before a draw die. This step is an important step in the process of the present invention and makes it possible to increase the reduction of area per pass to about 30%. Moreover, in the course of the drawing, annealing is not necessary, or the number of annealing operations can be greatly reduced. In addition, there can be greatly reduced the number of pickling operations which are usually carried out for removal of a lubricant and descaling, every time annealing is conducted. Therefore, contamination of the wire with hydrogen due to hydrogen absorption can be avoided. As a means for the heating, there can be properly chosen indirect heating with a burner, induction heating, resistance heating, etc. An atmosphere for the heating may be the air because all of the above heating means can achieve the heating in a short time. However, at elevated temperatures, the heating is conducted preferably in a nitrogen gas atmosphere or an inert gas atmosphere.

When the heating temperature is lower than 400°C, the ductility is low and the resistance to deformation is high. Therefore, the reduction of area per pass cannot be increased, and moreover distortion is accumulated in the wire, resulting in an increased number of annealing operations. On the other hand, when the heating temperature is higher than 750°C, an oxygen-enriched layer is formed in a surface portion even by short-time heating and lowers the processability after the heating greatly. Accordingly, the range of heating temperature at warm working is limited to 400 - 750°C. Considering heating in the air, more preferable heating temperature range is 500 - 650°C. The warm drawing in the above temperature range is usually repeated a plurality of times until dimensions necessary for warm rolling as subsequent step are obtained.

The wire thinned by the warm drawing is rolled for giving it a modified shape of cross section, i.e. which is not round. In this case, the reduction of area per pass can be increased by carrying out warm rolling under the same heating condition (400 - 750°C) as for the above warm drawing. Furthermore, in the course of the warm rolling, annealing is not necessary, or the number of annealing operations can be reduced. It is important that the above temperature range for the warm drawing and the warm rolling be employed for suppressing or preventing the formation of an oxygen-enriched layer in a surface portion of the titanium alloy. The warm-rolled wire having a rectangular shape of cross section can, if necessary, be subjected to cold finish rolling for increasing the dimensional accuracy.

One of the characteristics of the production process of the present invention is the combination of the warm drawing at 400 - 750°C and the warm rolling. This process has made it possible for the first time to produce a piston ring made of a titanium alloy which has a cross section which is not round.

From the wire thus obtained, piston rings are obtained by cold bending. Since the titanium alloy shows a very large spring back and has a low processability in bending, it is preferable to warm bend the wire with heating. The heating temperature in this case is preferably properly high. It is preferably 200 - 400°C from the viewpoint of preventing the contamination of the titanium alloy surface due to a high temperature.

Of titanium alloys, α + β type alloys or β type alloys can be increased in strength by carrying out heat treatment as aging treatment after solution treatment. The piston ring of the present invention may be subjected to the above heat treatment, and the heat treatment is carried out preferably after the bending. The surface hardening treatment is carried out after the bending or the above heat treatment as aging treatment.

For forming the hardened case composed of a non-molten oxygen-enriched layer, a wire having a cross section which is not round is obtained by carrying out warm working or a combination of warm working and cold working, after hot working, and then bending into a ring shape.

The ring thus formed is held in an oxygen-containing atmosphere with heating at a temperature of 550 - 1050°C to form an oxygen-enriched layer in a surface portion of the titanium alloy.

As the oxygen-containing atmosphere, there may be employed not only the air but also mixed gases of oxygen and nitrogen, etc., and vacuums of reduced pressure to about 1.33·10⁻³ mbar (10⁻³ Torr) containing a very slight amount of oxygen.

When the heating temperature is lower than 550°C, oxygen cannot be incorporated as a solid solution and dispersed into the titanium alloy matrix. When the heating temperature is higher than 1050°C, grains of the titanium alloy main body are coarsened, so that the toughness is deteriorated. Moreover, oxygen is excessively incorporated as a solid solution, so that a brittle oxygen-enriched layer is formed. When used, a piston ring having the brittle oxygen-enriched layer tends to be chipped or cracked. Therefore, the range of temperature at heating in the oxygen-containing atmosphere is limited to 550 - 1050°C.

For example, when a wire of Ti-6Al-4V alloy, a typical titanium alloy, is bent into a ring shape and then heated in the air for 1 hour, a depth of oxygen-enriched layer of 20 »m or more or 40 »m or more can be attained at 800°C or 900°C, respectively. A product obtained by removing the oxide coating formed in the outermost surface portion can be used as a piston ring.

In addition, α + β type and β type titanium alloys are more effective when the main body of piston ring is strengthened by solution treatment and aging and the piston ring is used after the formation of an oxygen-enriched layer in a surface portion of the ring. In this case, when the oxygen-enriched layer is formed by carrying out the solution treatment by heating and rapid cooling in an oxygen-containing atmosphere after the bending into a ring, a treatment for forming the oxygen-enriched layer after the solution treatment can be omitted.

The piston ring made of a titanium alloy of the present invention has a fiber structure in the circumferential direction of the piston ring and hence has sufficient strength and toughness against external stress applied in the transverse direction of the ring.

On the other hand, since the titanium alloy is poor in abrasion resistance and resistance to seizure, it is important to form a hardened case on at least a sliding surface of the ring which slides on a cylinder wall.

A hardened case whose surface portion has been enriched with oxygen is effective in improving the abrasion resistance and the resistance to seizure.

According to the production process of the present invention, the processing into a thin wire can be conducted while minimizing surface contamination, because the warm working is carried out in a specified temperature range. Moreover, a piston ring having a high dimensional accuracy can be efficiently produced. In addition, according to the production process of the present invention, there can be utilized, as it is, the oxygen-enriched layer formed by the solution treatment optionally carried out after the bending into a ring shape, and hence the production efficiency can be increased.

The aforesaid piston ring made of a titanium alloy has a weight of about 60% of that of a piston ring made of a 17Cr type stainless steel, a conventional material, and hence can cope with the increase in power and speed of internal-combustion engines.

There are described below in detail examples to which the present invention was applied.

### Example 1

A coil of wire of 6Al-4V-Ti alloy hot rolled so as to have a wire diameter of 6.0 mm was cut throughout its circumference and length so as to have a wire diameter of 5.7 mm with a cutting tool by the use of a peeling machine. The coil of wire thus treated was annealed at 550°C in a batch type vacuum annealing furnace. Then, a drawing lubricant was applied on the surface of the coil of wire, after which warm drawing through a die was conducted to obtain a thin wire of 1.7 mm in diameter. In this case, the wire-heating temperature was 600°C, resistance heating was employed, and argon gas was introduced into a heating furnace to prevent the oxidation of the wire surface and the formation of an oxygen-enriched layer. The rate of the warm drawing through the die per pass was adjusted to about 30% or less, and the drawing was repeated until the wire diameter became 1.7 mm.

From the coil of wire of 1.7 mm in diameter obtained by the warm drawing through the die, the drawing lubricant was removed by descaling in a salt bath and with nitric-hydrofluoric acid.

The coil of wire of 1.7 mm in diameter freed of the lubricant was passed through a resistance heating furnace at 610°C in an argon gas atmosphere and made into a 0.85 mm x 2.3 mm flattened wire by one pass by the use of a pair of driving rolls, i.e. an upper roller and a lower roller.

Then, the flattened wire was finished into a 0.82 mm x 2.25 mm material for piston ring by cold rolling on every side.

The coil of wire obtained by the finish rolling was passed through a continuous annealing furnace set at 700°C, in an argon gas atmosphere to remove distortion due to the cold working.

The thus obtained coil of wire for piston ring made of 6Al-4V-Ti alloy was passed through a heating furnace at 350°C and continuously shaped into rings with an outside diameter of 50 mm by the use of a three-point bending. Then, the rings were cut off to obtain 150 rings. Fifty of these piston rings were subjected to gas nitriding treatment at 850°C, and the surface hardness of nitrided piston rings was measured to be HV1000-1200.

The remaining 100 piston rings were subjected to solution treatment (water-cooling after heating at 950 °C for 30 minutes in a vacuum furnace) and aging treatment (standing to coolant after heating at 538 °C for 4 hours). Then, fifty of them were subjected to hard chromium plating. A CrN hardened case was formed on the other 50 piston rings by a PVD method.

For confirming the strength of the main body of piston ring made of 6Al-4V-Ti obtained in the above, six rods of 150 mm in length were obtained from the wire of 5 mm in diameter which was being warm drawn. Three of them were annealed at 700°C for 1 hour, and the remaining three rods were subjected to solution treatment (water-cooling after heating at 950 °C for 30 minutes) and aging treatment (air-cooling after heating at 538°C for 4 hours). Then, the six rods were individually subjected to a tensile test. For comparison, three rods of 150 mm in length were obtained from a drawn material with a diameter of 5 mm of a 13Cr type stainless steel (0.64C-0.28Si-0.75Mn-13.05Cr- the balance Fe), one of conventional materials. They were quenched and then tempered to adjust the hardness to HRC41 and then. subjected to the tensile test.

As a result of the tensile test, it was found that the average tensile strength of the annealed products of 6Al-4V-Ti alloy was 106.3 kgf/mm²*, that of the solution-treated and aged products of this alloy 127.1 kgf/mm²*, and that of the quenched and tempered products of the 13Cr type stainless steel 125.6 kgf/mm²*.
* 1 kgf/mm² = 9.81 N/mm².

### Example 2

A coil of wire of 8Al-1Mo-1V-Ti alloy hot rolled so as to have a wire diameter of 6.0 mm was subjected to warm drawing through a die, warm rolling and cold finish rolling under the same conditions in Example 1 and then bent at ordinary temperature. The thus obtained rings after annealing were sprayed with molybdenum to produce piston rings. When the direction of fiber of the piston rings was investigated with respect to their micro-structure, it was confirmed that the the direction of fiber was the same as the circumferential direction of the piston rings. Three rods of 150 mm in length were obtained from the wire of 5 mm in diameter which was being warm drawn, and they were annealed at 700°C for 1 hour and then subjected to a tensile test.

The average of the test results was 107.1 kgf/mm² (1 kgf/mm² = 9.81 N/mm²).

As described above, by subjecting a hot-rolled titanium alloy wire to warm drawing, warm rolling and cold finish rolling, bending the thus treated wire into a ring shape, and then subjecting the same to surface hardening treatment, as in Example 1 and Example 2, a piston ring having a high dimensional accuracy can be efficiently produced, and moreover there can be attained characteristics equal or similar to those of the piston rings made of the 13Cr type stainless steel.

### Example 3

Ti-5Al-2.5Sn alloy, an α type titanium alloy, was made into a square wire having dimensions of section of 2.0 mm x 3.5 mm. Then, the wire was continuously shaped into rings with the outside diameter of 50 mm by three-point bending so that the shorter sides of the square mignt be the outer and inner sides of the ring, respectively. Thereafter, the wire was cut to obtain 60 rings. Twenty of these rings were heated at 780°C for 1 hour in the air, and the remaining 40 rings were heated at 840°C for 1 hour in the air. From twenty of these 40 rings, the oxide coating in the circumferential portion was thinly removed by grinding, and the rings thus treated were subjected to gas nitrocarburizing treatment for 6 hours in an ammonolysis gas atmosphere at 580°C.

After the above surface hardening treatment, the section hardness was measured. Consequently, in contrast to the hardness of the parent material for the treated products of HV318-330, the surface hardness of the 780°C heated products was HV527 on an average, and the depth of their hardened case portion with a surface hardness of HV450 or more was about 25 »m. The surface hardness of the 840°C heated products was HV519 on an average, and the depth of their hardened case portion with a surface hardness of HV450 or more was about 30 »m or more.

The average surface hardness of the products obtained by the oxygen-enriching treatment followed by the nitrocarburizing treatment was HV1250.

### Example 4

Ti-6Al-4V alloy, an α + β type titanium alloy, was made into a square wire having dimensions of section of 2.0 mm x 3.5 mm. This wire was continuously shaped by winding the same spirally and closely around a column made of heat-resistant steel so that the shorter sides of the square might be the outer and inner sides of the resulting ring, respectively, and that the outside diameter might be 50 mm. Then, the wire restrained by the close winding around the column made of heat-resistant steel was placed in a vacuum heat-treating furnace at 920°C, and the retention time was adjusted to 1 hour. Thereafter, break and immediate water cooling were carried out. Thus, solution treatment was carried out. The degree of vacuum in the vacuum heat-treating furnace during the retention of the wire with heating was adjusted to 1.33·10⁻² mbar (10⁻² Torr).

After the solution treatment, the spirally wound wire was cut in the axial direction to be separated into individual rings. Then, the individual rings were put side by side on a flat steel plate and the same flat steel plate as the above one was placed thereon. The assembly thus obtained was placed in a heating furnace at 538°C and aged for 4 hours.

After the solution treatment and the aging treatment, the sections of some of the rings were corroded with a solution of 0.5 cc of hydrofluoric acid in 100 cc of water. Then, these test pieces were observed under an optical microscope. Consequently, a white oxygen-enriched layer was found in the surface portion and its depth was 65 »m. As a result of hardness measurement, it was found that the hardness of the parent material was HV397 and the surface hardness was HV532 on an average.

### Example 5

A non-molten oxygen-enriched layer was formed in a surface portion of a titanium alloy which was one of the additional characteristics of the present invention, and the Fabry-perét testing described below was carried out for confirming that the said layer was effective in preventing seizure between the titanium alloy and a metal on which the alloy slided. In the Fabry-perét testing, a test piece having a diameter of 6.5 mm and a length of 40 mm was rolled at 300 rpm, the rolling test piece was held between two blocks made of the aforesaid metal, a gradually increasing load as holding pressure was applied, seizure was detected by the torque change of a pin provided in the upper part of the test piece, and a load at which the seizure was detected was measured. In this test, as the aforesaid metal, there was used FC25, the cast iron prescribed in JIS, which is a material for cylinder of engine. There was employed a wet method in which a lubricating oil was dropped during the test. The load was applied in a rate of 78.5 N/s (8 kgf/sec). It has been confirmed by experience that the above test method permits faithful simulation of the degree of seizure in a test using real piston rings.

Ti-13V-11Cr-3Al alloy, a β type titanium alloy, was hot worked into stocks of 8 mm in diameter. The stocks were divided into two groups and subjected to solution treatment and aging in the air as they were in the first group or after roughing into a predetermined shape in the second group.

Then, the stocks in the first group were cut to a diameter of 6.5 mm so as to remove completely the oxygen-enriched layer formed in the surface portion during the above heat treatment, and the stocks thus treated were used as reference stocks. In the second group, only the oxide coating formed on the outermost surface during the above heat treatment was removed from the stocks by grinding, and the stocks thus treated were used as stocks according to the present invention.

In addition, as a conventional material, 0.87%C-0.47%Si-0.43%Mn-17.12%Cr-1.20%Mo-0.30%V-Fe steel (17Cr steel) (which is now a material with the highest resistance to seizure and abrasion resistance, for steel rings used after being nitrided) was roughed into a predetermined shape, tempered to HRC40 by quenching and tempering, and then subjected to finish working. Subsequently, it was subjected to gas nitriding treatment at 540°C for 20 hours. Since a brittle nitride was formed on the outermost surface of a nitrogen-diffused layer by the gas nitriding treatment, the nitride was removed by grinding.

The Fabry-perét testing was carried out in the manner described above, and the individual measurement results were expressed in terms of induces by taking as 100 a load at which the sample obtained by subjecting the conventional material to the nitriding treatment underwent seizure. The results are evaluated as resistance to seizure in Table 1.

**Table 1**

| Sample No. | Alloy | Hardened case | Resistance to seizure | Remarks |
|---|---|---|---|---|
| 1 | Ti-13V-11Cr-3Aℓ | Oxygen-enriched layer | 95.1 | Sample of the invention |
| 2 | " | None | 35.6 | Reference sample |
| 3 | 17Cr steel | Nitrided layer | 100 | Conventional sample |

From Table 1, it can be seen that the sample of the invention, i.e., sample No.1 obtained by giving an oxygen-enriched layer to the titanium alloy has a resistance to seizure which is substantially equal to that of the conventional sample, i.e., sample No. 3 obtained by nitriding 17Cr steel.

On the other hand, it can be seen that the reference sample, i.e., sample No. 2 obtained without surface hardening treatment undergoes seizure very easily.

### Example 6

Miniature tensile specimens were obtained from an annealed round rod with a diameter of 65 mm of 6Al-4V-Ti alloy, in the radial direction.

On the other hand, a wire of 4.8 mm in diameter obtained in the course of the hot drawing in Example 2 was annealed at 704°C for 2 hours, and miniature tensile specimens having the same dimensions as those of the aforesaid specimens were prepared from the annealed wire.

The former tensile specimens were used as representatives of piston rings obtained from a rod by machining, and the latter tensile specimens were used as representatives of piston rings having a fiber structure in the circumferential direction which corresponded to the piston ring of the present invention. Mechanical properties of the two kinds of the tensile specimens were evaluated.

A tensile test was carried out at ordinary temperature. The results obtained are shown in Table 2.

**Table 2**

| | | Tensile strength (kgf/mm²)* | Elongation (%) | Reduction of area (%) |
|---|---|---|---|---|
| Reference specimen | Radius direction of 65-mm dia. round rod | 96.7 | 14.8 | 32.1 |
| Specimen of the invention | Longitudinal direction of 4.8-mm dia. wire | 112.3 | 18.5 | 39.8 |

| | | | | |
|---|---|---|---|---|
| * 1 kgf/mm² = 9.81 N/mm² | | | | |

As shown in Table 2, when the characteristics in the radius direction of the round rod were compared with the characteristics of the wire, all of tensile strength, elongation and reduction of area of the former were lower than those of the wire. Thus, even when the two materials both made of a titanium alloy of the same composition are thus compared, it can be seen the piston rings having a fiber structure in the circumferential direction, i.e., the piston rings of the present invention, are superior.

## Claims

1. A piston ring made of a titanium alloy, which comprises a main body of piston ring made of the titanium alloy, and has a cross section which is not round, a fiber structure in the circumferential direction of the piston ring, said fiber structure having been produced by warm drawing a wire, forming the drawn wire into said piston ring cross section by warm or warm and cold rolling and by bending the rolled wire, and a hardened case formed on at least a sliding surface which slides on a cylinder wall.

2. A piston ring made of a titanium alloy according to claim 1, wherein the hardened case of said sliding surface is composed of a non-molten oxygen-enriched layer.

3. A piston ring made of a titanium alloy according to claim 1, wherein the hardened case of said sliding surface is a composite case comprising a non-molten oxygen-enriched layer.

4. A process for producing a piston ring claimed in anyone of claims 1 to 3, which comprises shaving or peeling a hot-rolled wire, drawing the shaved or peeled wire with heating at 400 - 750 °C in the air or an inert gas atmosphere, making the drawn wire into a material for piston ring having a cross section which is not round by warm rolling alone or by warm rolling followed by cold finish rolling, bending this material, and then subjecting the same to case hardening treatment.

5. A process for producing a piston ring claimed in anyone of claims 1 to 3, which comprises bending a titanium alloy wire material into a ring shape, and then forming an oxygen-enriched layer in a surface portion of the ring by heating the ring at a temperature of 550 - 1050 °C in an atmosphere containing at least oxygen.

6. A process according to claim 5, wherein said ring shaped wire material is hardened by solution treatment and aging, which solution treatment is carried out at the same time as said formation of an oxygen-enriched layer.

## Patentansprüche

1. Aus einer Titanlegierung hergestellter Kolbenring, der einen Hauptkörper des aus der Titanlegierung hergestellten Kolbenringes aufweist und einen Querschnitt, der nicht rund ist, ein Fasergefüge in der Umfangsrichtung des Kolbenringes, welches Fasergefüge durch Warmziehen eines Drahtes, Formen des gezogenen Drahtes zu dem genannten Kolbenringquerschnitt durch Warm- oder Warm- und Kaltwalzen und durch Biegen des gewalzten Drahtes erzeugt wurde, und einen gehärteten Mantel hat, der auf wenigstens einer Gleitoberfläche gebildet wurde, die auf einer Zylinderwand gleitet.

2. Aus einer Titanlegierung hergestellter Kolbenring nach Anspruch 1,
bei dem der gehärtete Mantel der Gleitoberfläche aus einer nicht geschmolzenen, mit Sauerstoff angereicherten Schicht besteht.

3. Aus einer Titanlegierung hergestellter Kolbenring nach Anspruch 1,
bei dem der gehärtete Mantel der Gleitoberfläche ein Verbundmantel mit einer nicht geschmolzenen, mit Sauerstoff angereicherten Schicht ist.

4. Verfahren zur Erzeugung eines in irgendeinem der Ansprüche 1 bis 3 beanspruchten Kolbenringes,
das ein Schaben oder Abschälen eines warmgewalzten Drahtes, ein Ziehen des geschabten oder abgeschälten Drahtes mit Erhitzung auf 400 - 750 °C in der Luft oder einer inerten Gasatmosphäre, Formen des gezogenen Drahtes zu einem Material für einen Kolbenring mit einem Querschnitt, der nicht rund ist, durch Warmwalzen allein oder durch Warmwalzen mit nachfolgendem Kaltendwalzen, ein Biegen dieses Materials und danach dessen Unterwerfen einer Mantelhärtungsbehandlung aufweist.

5. Verfahren zur Erzeugung eines in irgendeinem der Ansprüche 1 bis 3 beanspruchten Kolbenringes,
das ein Biegen eines Titanlegierungs-Drahtmaterials zu einer Ringform und danach das Bilden einer mit Sauerstoff angereicherten Schicht in einem Oberflächenteil des Ringes durch Erhitzen des Ringes auf eine Temperatur von 550 - 1050 °C in einer wenigstens Sauerstoff enthaltenden Atmosphäre aufweist.

6. Verfahren nach Anspruch 5,
bei dem das ringförmige Drahtmaterial durch Lösungsglühbehandlung und Anlassen gehärtet wird, welche Lösungsglühbehandlung zur gleichen Zeit wie die Bildung einer mit Sauerstoff angereicherten Schicht durchgeführt wird.

## Revendications

1. Segment de piston, fait d'un alliage de titane, qui comprend un corps principal de segment de piston fait de l'alliage de titane et qui a une section transversale non ronde, une structure fibreuse dans le sens de la circonférence du segment de piston, ladite structure fibreuse ayant été produite par étirage à chaud d'un fil métallique, par la mise en forme du fil étiré pour constituer ladite section transversale du segment de piston par laminage à chaud ou par laminage à chaud et à froid et par cintrage du fil laminé, et une couche trempée formée sur au moins une surface de glissement qui glisse sur une paroi de cylindre.

2. Segment de piston, fait d'un alliage de titane selon la revendication 1, dans lequel la couche trempée de ladite surface de glissement est composée d'une couche non fondue enrichie en oxygène.

3. Segment de piston fait d'un alliage de titane, selon la revendication 1, dans lequel la couche trempée de ladite surface de glissement est une couche composite comprenant une couche non fondue enrichie à l'oxygène.

4. Procédé de fabrication d'un segment de piston selon l'une quelconque des revendications 1 à 3, qui comprend l'ébarbage ou l'écroutage d'un fil métallique laminé à chaud, l'étirage du fil ébarbé ou écrouté avec chauffage à une température de 400 à 750 °C dans l'air ou dans une atmosphère de gaz inerte, la mise en forme du fil étiré pour obtenir un matériau destiné à un segment de piston ayant une section transversale qui n'est pas ronde, par laminage à chaud uniquement ou par laminage à chaud suivi d'un laminage de finissage à froid, le cintrage de ce matériau et ensuite l'exécution d'un traitement de trempe superficielle sur celui-ci.

5. Procédé de fabrication d'un segment de piston selon l'une quelconque des revendications 1 à 3, qui comprend le cintrage d'un fil en alliage de titane pour lui donner une forme annulaire et, ensuite, la formation d'une couche enrichie en oxygène dans une partie superficielle de l'anneau par chauffage de l'anneau à une température de 550 à 1050 °C dans une atmosphère contenant au moins de l'oxygène.

6. Procédé selon la revendication 5, dans lequel ledit fil métallique en forme d'anneau est trempé par un traitement de solubilisation et par vieillissement, lequel traitement de solubilisation est exécuté en même temps que ladite formation d'une couche enrichie en oxygène.
